Europäisches Patentamt

European Patent Office

Office européen des brevets

(11) Veröffentlichungsnummer: **0 331 099 B1**

## (12) EUROPÄISCHE PATENTSCHRIFT

(45) Veröffentlichungstag der Patentschrift: **21.10.92**

(21) Anmeldenummer: **89103473.8**

(22) Anmeldetag: **28.02.89**

(51) Int. Cl.⁵: **H02G 3/04**, F16L 11/00

(54) **Rohraggregat für die Aufnahme von Kabeln.**

(30) Priorität: **02.03.88 DE 3806663**

(43) Veröffentlichungstag der Anmeldung:
**06.09.89 Patentblatt 89/36**

(45) Bekanntmachung des Hinweises auf die
Patenterteilung:
**21.10.92 Patentblatt 92/43**

(84) Benannte Vertragsstaaten:
**AT BE CH DE ES FR GB GR IT LI NL SE**

(56) Entgegenhaltungen:
**EP-A- 0 231 504**
**GB-A- 2 102 909**
**GB-A- 2 183 000**

(73) Patentinhaber: **Dipl.-Ing. Dr. Ernst Vogelsang
GmbH & Co. KG
Industriestrasse 2
W-4352 Herten/Westfalen(DE)**

(72) Erfinder: **Vogelsang, Horst
Zwickauer Strasse 12
W-4352 Herten/Westf.(DE)**

(74) Vertreter: **Andrejewski, Walter, Dr. et al
Patentanwälte Andrejewski, Honke & Partner
Postfach 10 02 54 Theaterplatz 3
W-4300 Essen 1(DE)**

EP 0 331 099 B1

## Beschreibung

Die Erfindung bezieht sich gattungsgemäß auf ein Rohraggregat für die Aufnahme von Kabeln, bestehend aus vier stranggepreßten Kunststoffrohren, die durch angeformte Filmscharniere in Form von flexiblen Abstandsstegen vereinigt und zu einem Rohrbündel zusammenlegbar sind, wobei die einzelnen Kunststoffrohre bündelzentrumsseitig angeformte Kernelemente aufweisen, die im Rohrbündel aneinander anliegen. Die Kunststoffrohre und die angeformten Filmscharniere sowie damit das Rohraggregat insgesamt sind durch Strangpressen, nämlich durch Extrudieren, hergestellt. - Ein aus einem solchen Rohraggregat zusammengelegtes Rohrbündel kann unmittelbar erdverlegt, aber auch in ein Schutzrohr eingezogen werden. Die Kabel sind z. B. Postkabel oder auch Enegiekabel.

Bei dem bekannten gattungsgemäßen Rohraggregat (DE 35 40 690, DE 35 40 691) sind die Kernelemente an die zugeordneten Kunststoffrohre angeformte, im Querschnitt im wesentlichen dreieckförmige Hohlprofile. Das hat sich bewährt, ist jedoch fertigungstechnisch aufwendig, weil die Hohlprofile mit besonderen Hilfsmitteln kalibriert werden müssen, wenn anders sie bereichsweise zusammenfallen und/oder den runden Querschnitt des zugeordneten Kunststoffrohres beeinträchtigen. Im übrigen wirken die so geformten Kernelemente in sehr starkem Maße stabilisierend auf das Rohrbündel. Das Rohrbündel ist daher verhältnismäßig steif, was bei gerader Verlegung erwünscht, bei stark bogenförmiger Verlegung jedoch häufig weniger erwünscht ist.

Der Erfindung liegt die Aufgabe zugrunde, ein Rohraggregat des beschriebenen Aufbaus so einzurichten, daß es auf einfache Weise gefertigt werden kann und zu einem Rohrbündel zusammenlegbar ist, welches weniger Steif ist als die bekannte Ausführungsform und welches im Bedarfsfall auch bogenförmig, mit verhältnismäßig kleinem Krümmungsradius, verlegt werden kann.

Zur Lösung dieser Aufgabe lehrt die Erfindung, daß die Kernelemente als massive, längslaufende, beim Strangpressen der Kunststoffrohre angeformte Stege ausgeführt sind, daß die Kernelemente von zwei im Rohrbündel gegenüberliegenden Kunststoffrohren im Rohrbündel parallel zueinander geführt sowie nebeneinander angeordnet sind und daß die Kernelemente der beiden weiteren Kunststoffrohre im Rohrbündel orthogonal zu den nebeneinanderliegenden Kernelementen verlaufen. - Das erfindungsgemäße Rohraggregat kann einfach und ohne Kalibrierungsprobleme gefertigt werden, da die Kernelemente nicht mehr Hohlprofile, sondern vielmehr massive Profile oder Vollprofile sind. Die beschriebene Anordnung reduziert die Steifheit des aus dem Rohraggregat gebildeten Rohrbündels welches auch für bogenförmige Verlegung, selbst bei kleinem Krümmungsradius, ausreichend flexibel ist.

Im einzelnen bestehen im Rahmen der Erfindung mehrere Möglichkeiten der weiteren Ausbildung und Gestaltung. Es empfiehlt sich, die Anordnung so zu treffen, daß die Kernelemente, bezogen auf die zugeordneten Kunststoffrohre, im wesentlichen in radialer Richtung verlaufen. Besonders flexibel ist das Rohrbündel, wenn die nebeneinanderliegenden Kernelemente im geraden Rohrbündel mit Ausgleichsspalt nebeneinander liegen und wenn die nebeneinanderliegenden Kernelemente außerdem im Rohrbündel eine Länge aufweisen, die kleiner ist als der Abstand der gegenüberliegenden Kunststoffrohre. Die im Rohrbündel orthogonal zu den nebeneinanderliegenden Kernelementen angeordneten Kernelemente liegen zweckmäßigerweise einander gegenüber. Im allgemeinen wird man die Anordnung so treffen, daß diese Kernelemente mit ihren Stirnflächen an den nebeneinanderliegenden Kernelementen anliegen.

Legt man ein erfindungsgemäßes Rohraggregat zu einem Rohrbündel zusammen, so kann das Rohrbündel in dieser Form auf verschiedene Weise fixiert werden, beispielsweise durch Umreifung. Die Umreifung kann mit Umreifungsmaschinen angebracht werden und besteht z. B. aus Umreifungsbändern, die längs der Länge des Rohrbündels mit Abstand voneinander angeordnet sind. Insbesondere kann insoweit mit Klebbändern aus verstrecktem Kunststoff gearbeitet werden. Eine bevorzugte Ausführungsform der Erfindung zur Fixierung des Rohrbündels ist in Kombination mit den vorstehend beschriebenen Merkmalen dadurch gekennzeichnet, daß die Außenrohre des Rohraggregates Verschlußelemente aufweisen, die Formschlußausbildungen in Form von Ausnehmungen und Einrastzungen besitzen, und daß die Formschlußelemente im Rohrbündel vereinigt sind. Die Formschlußelemente können dabei als längslaufende, beim Strangpressen der Kunststoffrohre und damit des Rohraggregates angeformte Stege ausgeführt sein. Die Formschlußausbildungen lassen sich dann auf einfache Weise durch Ausstanzen herstellen. Um sicherzustellen, daß beim Zusammenlegen eines erfindungsgemäßen Rohraggregates zum Rohrbündel die Formschlußausbildungen leicht zum Verrasten gebracht werden können, empfiehlt die Erfindung, daß die Verschlußelemente, einschließlich der Formschlußausbildungen, im Rohrbündel, in der Rohrbündelachse betrachtet, firstförmig verlaufen bzw. firstförmig sich durchfassen. Diese Ausführungsform hat den weiteren Vorteil, daß die Kräfte, die aus elastischer Verformung im Rohrbündel verbleiben und versuchen, das Rohrbündel wieder zu öffnen, ohne weiteres aufgenommen werden, während darüber hinaus bei Erdverlegung eine Blokkierung der ineinander eingerasteten Formschlußausbildungen erreicht wird.

Die erreichten Vorteile sind darin zu sehen, daß das erfindungsgemäße Rohraggregat auf sehr einfache Weise durch Strangpressen hergestellt werden kann, und zwar einschließlich der Kernelemente und, soweit vorgesehen, auch der Verschlußelemente. Dabei treten keine Kalibrierungsprobleme auf, und zwar weder in bezug auf die Kernelemente noch in bezug auf die Verschlußelemente noch auf die einzelnen Kunststoffrohre selbst. Gleichzeitig läßt sich die Anordnung der beschriebenen Bauteile des erfindungsgemäßen Rohraggregates und deren Dimensionierung so einrichten, daß das aus dem Rohraggregat zusammengelegte Rohrbündel die Flexibilität aufweist, die zur bogenförmigen Verlegung erwünscht ist, und zwar auch bei bogenförmiger Verlegung mit verhältnismäßig kleinem Krümmungsradius.

Im folgenden wird die Erfindung anhand einer lediglich ein Ausführungsbeispiel darstellenden Zeichnung ausführlicher erläutert. Es zeigen in schematischer Darstellung

> Fig. 1 einen Querschnitt durch ein erfindungsgemäßes Rohraggregat nach dem Zusammenlegen zum Rohrbündel,
>
> Fig. 2 eine Abwicklung des Gegenstandes der Fig. 1 in die Ebene bei gegenüber der Fig. 1 verkleinertem Maßstab, und
>
> Fig. 3 eine Draufsicht auf den Gegenstand nach Fig. 2, ausschnittsweise.

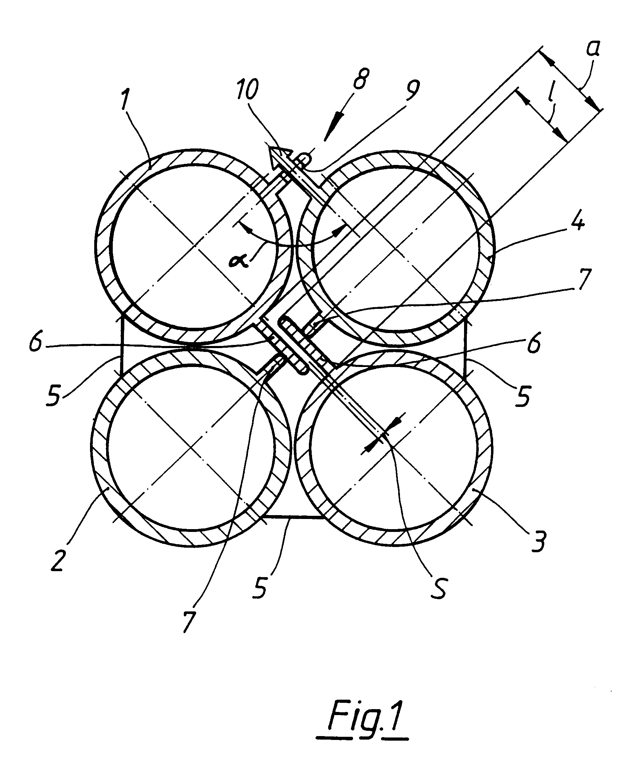

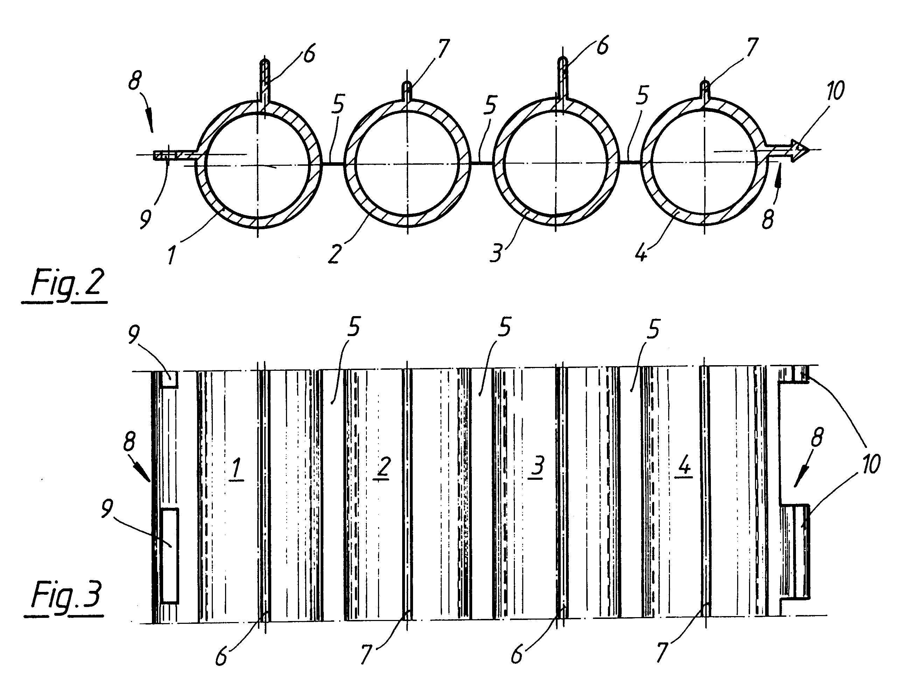

Das in den Figuren dargestellte Rohraggregat ist für die Aufnahme von Kabeln bestimmt. Es besteht aus vier stranggepreßten, d. h. extrudierten, Kunststoffrohren 1, 2, 3, 4, die durch angeformte Filmscharniere 5 in Form von Abstandsstegen vereinigt und zu einem Rohrbündel zusammenlegbar sind. Die Fig. 1 zeigt ein solches Rohrbündel im zusammengelegten Zustand. Aus den Fig. 2 und 3 entnimmt man, daß die einzelnen Kunststoffrohre 1, 2, 3, 4 bündelzentrumsseitig angeformte Kernelemente 6, 7 aufweisen, die im Rohrbündel aneinander anliegen.

Die Kernelemente 6, 7 sind als massive Profile, d. h. als Vollprofile, ausgeführt. Die Anordnung ist so getroffen, daß die Kernelemente 6 von zwei im Rohrbündel gegenüberliegenden Kunststoffrohren 1, 3 im Rohrbündel parallel zueinander geführt sowie nebeneinander angeordnet sind. Die Anordnung ist fernerhin so getroffen, daß die Kernelemente 7 der beiden weiteren Kunststoffrohre 2, 4 im Rohrbündel orthogonal zu den nebeneinanderliegenden Kernelementen 6 verlaufen. Die Kernelemente 6, 7 sind als längslaufende, beim Strangpressen der Kunststoffrohre 1, 2, 3, 4 angeformte Stege ausgeführt. Sie verlaufen, bezogen auf ihre zugeordneten Kunststoffrohre 1, 2, 3, 4, im wesentlichen in radialer Richtung. Damit das Rohrbündel flexibel ist, ist der in Fig. 1 erkennbare Ausgleichsspalt S zwischen den nebeneinanderliegenden Kernelementen 6 verwirklicht. Er verschwindet, wenn das Rohrbündel bogenförmig verlegt wird. Man entnimmt aus der Fig. 1 fernerhin, daß die nebeneinanderliegenden Kernelemente 6 im Rohrbündel eine Länge 1 aufweisen, die kleiner ist als der Abstand a der gegenüberliegenden Kunststoffrohre 1, 3.

Die im Rohrbündel orthogonal zu den nebeneinanderliegenden Kernelementen 6 angeordneten Kernelemente 7 liegen im Ausführungsbeispiel und vorzugsweise einander gegenüber. Sie liegen mit ihren Stirnflächen an den im Rohrbündel nebeneinanderliegenden Kernelementen 6 an.

Im Ausführungsbeispiel sind die Außenrohre 1, 4 des Rohraggregates mit Verschlußelementen 8 versehen, die Formschlußausbildungen in Form von Ausnehmungen 9 und Einrastzungen 10 aufweisen. Dazu wird insbesondere auf die Fig. 3 verwiesen. Im übrigen sind die Formschlußelemente 9, 10 im Rohrbündel vereinigt. Auch die Verschlußelemente 8 sind als durchlaufende, beim Strangpressen der Kunststoffrohre 1, 4 angeformte Stege ausgeführt. Die Fig. 1 macht deutlich, daß die Verschlußelemente 8, einschließlich der Formschlußausbildungen 9, 10 im Rohrbündel, in der Rohrbündelachse betrachtet, firstförmig verlaufen bzw. firstförmig sich durchfassen, und zwar mit einem Firstwinkel $\alpha$, der praktisch ein rechter Winkel ist. Insoweit wird auf die in Fig. 1 strichpunktiert eingezeichneten Mittellinien der Verschlußelemente 8 und den eingetragenen Winkel $\alpha$ verwiesen. Aus der Fig. 2 entnimmt man, daß die Verschlußelemente 8 parallel zu dem durchlaufenden Durchmesser, in dem die Filmscharniere 5 liegen, versetzt sind. Das erleichtert die Handhabung beim Schließen des Rohrbündels mit Hilfe der Formschlußausbildungen 9, 10. - Es versteht sich, daß die Kunststoffrohre 1, 2, 3, 4 auch mit unterschiedlichem Durchmesser ausgeführt werden können.

Die Verschlußelemente 8 und die Kernelemente 6, 7 werden beim Extrudieren fortlaufend angeformt. Sie können schon bei der Fertigung oder danach in Längsrichtung bereichsweise ausgestanzt werden. Auf diese Weise kann die Flexibilität des Rohrbündels vergrößert werden, und zwar so weit, daß das Rohrbündel, wie ein Kabel, für Versand- und Verlegezwecke aufgetrommelt werden kann.

**Patentansprüche**

1. Rohraggregat für die Aufnahme von Kabeln aus vier stranggepreßten Kunststoffrohren (1, 2, 3, 4), die durch angeformte Filmscharniere

(5) in Form von flexiblen Abstandsstegen vereinigt und zu einem Rohrbündel zusammenlegbar sind, wobei die einzelnen Kunststoffrohre (1, 2, 3, 4) bündelzentrumsseitig angeformte Kernelemente (6, 7) aufweisen, die im Rohrbündel aneinander anliegen, **dadurch gekennzeichnet,** daß die Kernelemente (6, 7) als massive, längslaufende, beim Strangpressen der Kunststoffrohre (1, 2, 3, 4) angeformte Stege ausgeführt sind, daß die Kernelemente (6) von zwei im Rohrbündel gegenüberliegenden Kunststoffrohren (1, 3) im Rohrbündel parallel zueinander geführt sowie nebeneinander angeordnet sind und daß die Kernelemente (7) der beiden weiteren Kunststoffrohre (2, 4) im Rohrbündel orthogonal zu den nebeneinanderliegenden Kernelementen (6) verlaufen.

2. Rohraggregat nach Anspruch 1, dadurch gekennzeichnet, daß die Kernelemente (6, 7), bezogen auf die zugeordneten Kunststoffrohre (1, 2, 3, 4), in radialer Richtung verlaufen.

3. Rohraggregat nach einem der Ansprüche 1 oder 2, dadurch gekennzeichnet, daß die nebeneinanderliegenden Kernelemente (6) im geraden Rohrbündel mit Ausgleichsspalt (S) nebeneinander liegen.

4. Rohraggregat nach einem der Ansprüche 1 bis 3, dadurch gekennzeichnet, daß die nebeneinanderliegenden Kernelemente (6) im Rohrbündel eine Länge (1) aufweisen, die kleiner ist als der Abstand (a) der gegenüberliegenden Kunststoffrohre (1, 3).

5. Rohraggregat nach einem der Ansprüche 1 bis 4, dadurch gekennzeichnet, daß die im Rohrbündel orthogonal zu den nebeneinanderliegenden Kernelementen (6) angeordneten Kernelemente (7) einander gegenüberliegen.

6. Rohraggregat nach einem der Ansprüche 1 bis 5, dadurch gekennzeichnet, daß die im Rohrbündel orthogonal zu den nebeneinanderliegenden Kernelementen (6) angeordneten Kernelemente (7) mit ihren Stirnflächen an den nebeneinanderliegenden Kernelementen (6) anliegen.

7. Rohraggregat nach einem der Ansprüche 1 bis 6, dadurch gekennzeichnet, daß in Kombination dazu die Außenrohre (1, 4) der Rohraggregate Verschlußelemente (8) aufweisen, die Formschlußausbildungen in Form von Ausnehmungen (9) und Einrastzungen (10) besitzen, und daß die Formschlußelemente (9, 10) im Rohrbündel vereinigt sind.

8. Rohraggregat nach Anspruch 7, dadurch gekennzeichnet, daß die Verschlußelemente (8) als längslaufende, beim Strangpressen der Kunststoffrohre (1, 4) angeformte Stege ausgeführt sind.

9. Rohraggregat nach einem der Ansprüche 7 oder 8, dadurch gekennzeichnet, daß die Verschlußelemente (8), einschließlich der Formschlußausbildungen (9, 10), im Rohrbündel, in der Rohrbündelachse betrachtet, firstförmig verlaufen bzw. firstförmig sich durchfassen.

## Claims

1. A pipe unit for receiving cables, comprising four extruded plastic pipes (1, 2, 3, 4) which are connected by film joints (5) formed thereon in the form of flexible distance pieces and can be combined to form a pipe bundle, wherein the individual plastic pipes (1, 2, 3, 4) have core members (6, 7) formed on them on their sides facing the centre of the bundle which fit closely against each other in the pipe bundle, characterised in that the core members (6, 7) are constructed as solid, longitudinal stays formed on the plastic pipes (1, 2, 3, 4) when the latter are extruded, that the core members (6) of two plastic pipes (1, 3) which are opposite each other in the pipe bundle are guided parallel to each other in the pipe bundle and are arranged side by side, and that the core members (7) of the two further plastic pipes (2, 4) run mutually perpendicular to the adjacent core members (6) in the pipe bundle.

2. A pipe unit according to Claim 1, characterised in that the core members (6, 7) run in a radial direction in relation to the associated plastic pipes (1, 2, 3, 4).

3. A pipe unit according to one of Claims 1 or 2, characterised in that the adjacent core members (6) lie side by side with a compensating gap (S) in the straight pipe bundle.

4. A pipe unit according to any one of Claims 1 to 3, characterised in that the adjacent core members (6) in the pipe bundle have a length (1) which is less than the distance (a) between the opposite plastic pipes (1, 3).

5. A pipe unit according to any one of Claims 1 to 4, characterised in that the core members (7) which are disposed mutually perpendicular to the adjacent core members (6) in the pipe bundle are opposite each other.

6. A pipe unit according to any one of Claims 1 to 5, characterised in that the core members (7) which are disposed mutually perpendicular to the adjacent core members (6) in the pipe bundle are located with their end faces sitting closely against the adjacent core members (6).

7. A pipe unit according to any one of Claims 1 to 6, characterised in that the outer pipes (1, 4) of the combined pipe unit have locking members (8), which locking members have positive locking formations in the form of recesses (9) and catches (10), and that the positive locking members (9, 10) are connected in the pipe bundle.

8. A pipe unit according to Claim 7, characterised in that the locking members (8) are constructed as longitudinal stays formed on the plastic pipes (1, 4) when the latter are extruded.

9. A pipe unit according to one of Claims 7 or 8, characterised in that the locking members (8), including the positive locking formations (9, 10), run in the form of a ridge or pass through each other in the form of a ridge, viewed along the axis of the pipe bundle.

**Revendications**

1. Groupe de tubes pouvant recevoir des câbles, constitué de quatre tubes en matière plastique extrudés (1, 2, 3, 4) qui sont réunis par des raccords flexibles (5) réalisés sous la forme de barrettes d'écartement et peuvent être repliés en un faisceau de tubes, les différents tubes en matière plastique (1, 2, 3, 4) comprenant du côté du centre du faisceau des éléments de noyau (6, 7) conformés qui sont appliqués les uns contre les autres à l'intérieur du faisceau de tubes, caractérisé par le fait que les éléments de noyau (6, 7) sont réalisés sous la forme de barrettes massives longitudinales conformées lors de l'extrusion des tubes en matière plastique (1, 2, 3, 4); que les éléments de noyau (6) de deux tubes en matière plastique (1, 3) placés en face l'un de l'autre dans le faisceau de tubes, sont guidés parallèlement l'un par rapport à l'autre dans le faisceau de tubes et disposés l'un à côté de l'autre; et que les éléments de noyau (7) des deux autres tubes en matière plastique (2, 4) s'étendent dans le faisceau de tubes orthogonalement par rapport aux éléments de noyau (6) juxtaposés.

2. Groupe de tubes selon la revendication 1, caractérisé par le fait que, rapportés aux tubes en matière plastique (1, 2, 3, 4) associés, les éléments de noyau (6, 7) s'étendent dans le sens radial.

3. Groupe de tubes selon l'une des revendications 1 ou 2, caractérisé par le fait que dans le faisceau de tubes, les éléments de noyau juxtaposés (6) sont placés l'un à côté de l'autre avec une fente de compensation (S).

4. Groupe de tubes selon l'une des revendications 1 à 3, caractérisé par le fait que dans le faisceau de tubes, les éléments de noyau juxtaposés (6) présentent une longueur (1) qui est inférieure à l'écartement (a) des tubes en matière plastique (1, 3) placés en face l'un de l'autre.

5. Groupe de tubes selon l'une des revendications 1 à 4, caractérisé par le fait que dans le faisceau de tubes, les éléments de noyau (7) disposés orthogonalement par rapport aux éléments de noyau juxtaposés (6) sont placés en face l'un de l'autre.

6. Groupe de tubes selon l'une des revendications 1 à 5, caractérisé par le fait que dans le faisceau de tubes, les éléments de noyau (7) disposés orthogonalement par rapport aux éléments de noyau juxtaposés (6) sont appliqués avec leurs surfaces frontales contre les éléments de noyau juxtaposés (6).

7. Groupe de tubes selon l'une des revendications 1 à 6, caractérisé par le fait que, en combinaison avec cela, les tubes extérieurs (1, 4) des groupes de tubes présentent des éléments de fermeture (8) munis de conformations à engagement positif sous la forme d'évidements (9) et de verrouillages (10), et que les éléments à engagement positif (9, 10) sont réunis dans le faisceau de tubes.

8. Groupe de tubes selon la revendication 7, caractérisé par le fait que les éléments de fermeture (8) sont réalisés sous la forme de barrettes longitudinales conformées lors de l'extrusion des tubes en matière plastique (1, 4).

9. Groupe de tubes selon l'une des revendications 7 ou 8, caractérisé par le fait que dans le faisceau de tubes, les éléments de fermeture (8), y compris les conformations à engagement positif (9, 10) s'étendent ou s'engagent l'un dans l'autre en forme de faite, vu dans l'axe du faisceau de tubes.

_Fig.1_

Fig.2

Fig.3